# EUROPEAN PATENT SPECIFICATION

(11) **EP 0 792 444 B1**
(45) Date of publication and mention of the grant of the patent: **02.06.1999**
(21) Application number: 95936741.8
(22) Date of filing: 13.11.1995
(51) Int. Cl.: G01K 1/14

(54) **PROBE FOR THE READING OF FOOD TEMPERATURE, PARTICULARLY IN HEAT LOWERING DEVICES**
FUHLER ZUM ABLESEN DER TEMPERATUR VON NAHRUNGSMITTELN, INSBESONDERE IN ABKUHLGERATEN
SONDE PERMETTANT DE MESURER LA TEMPERATURE DE PRODUITS ALIMENTAIRES, NOTAMMENT DANS LES DISPOSITIFS FRIGORIFIQUES

(30) Priority: 14.11.1994 IT TV940130
(43) Date of publication of application: 03.09.1997
(73) Proprietor: IRINOX S.R.L., 31010 Corbanese (IT)
(72) Inventor: GRANZIERA, Luigino, I-31010 Corbanese (TV) (IT)
(74) Representative: Cantaluppi, Stefano
(86) International application number: IT9500183
(87) International publication number: WO9615431

(56) References cited:
- DE-A- 4 300 971
- DE-U- 9 411 598
- SU-A- 962 636
- US-A- 2 364 841
- US-A- 4 425 089

## Description

### Technical Field

This invention as an object has a probe for the reading of food temperature, particularly in heat lowering devices.

The innovation finds special even if not exclusive application in the sector of large plants for the processing, preservation and administration of food products.

### Background Art

In prior art heat lowering devices are well known. In modern practice, freezers and the like, have found increasingly vast use, above all in the processes of manufacturing and preservation of food, therefore allowing in a subsequent phase, the retail distribution and consumption. Traditionally, one proceeded with the simple introduction of the food into the freezers, and here the temperature was empirically lowered, acting on external commands separate from the specific temperature of the introduced food. As a general rule the drawbacks observed could regard the non uniform freezing of the product or products introduced, therefore altering the necessary qualitative characteristics for a good preservation process. (See DE,U, 94 11 598 - TEMPERATURMESSTECHNIK GERABERG, 5 January 1995).

To overcome some of the drawbacks cited above, in the specific sector, it was thought of introducing a means of reading the temperature, which is none other than a probe based on those commonly used in cooking systems initially for community use which has now spread to domestic a level. More in particular, it is of a straight metallic component, essentially cylindric, developed longitudinally in order to almost resemble a pen, which on one side provides an element with an end which is somewhat pointed of the type sensitive to temperature variations, while the opposite end is introduced inside of a protective sheath coaxial to which the communicating cable meets the external data.

The user, therefore, once the food has been introduced into the freezer, must carefully stick the probe into the same, and reclose the door. The same probe, interacting with an external thermostat of the heat lowering device, and as soon as the freezing cycle of the product has been completed, must finally be removed, to allow other usage.

It is this last phase that results being the source of numerous drawbacks. In the first place the fact that during the freezing cycle, the probe practically forms a single body with the frozen product, making the extraction very difficult for the user. The operation is made even more difficult by the natural presence of fat that is unavoidably deposited onto the surface of the probe, therefore once grasped has a strong propensity to slip, a situation also aggravated in that on the same even before being grasped a film of condensation immediately forms.

Usually, the user, to extract the probe, must therefore expose the product for a long time to the outside, in order that it softens enough for removing but still with some difficulty, and therefore to reintroduce the food into the freezer or destine it to other purposes. Such condition causes the start of defrosting that, as already known, alters negatively the characteristics of the product, on one side reactivating the proliferation of bacteria, on the other further decreasing the nutritious values, with modification of the organoleptic characteristics. Resulting in a bad preservation, imposing a quick as possible consumption. Even under the hygienic profile, the operation result particularly negative, in fact, the user is obliged to handle the product more than once, and on all the sides to allow the extraction of the probe.

Finally other drawbacks regard the structural features of the probe. In detail, the lack of a safe grasp, can cause the interference of the hands with the connection cable of the equipment, which other than being able to be accidentally pulled, with the passing of time would wear out particularly in proximity of the entry into the sheath, necessitating a constant maintenance.

The aim of this invention is also to avoid the above-mentioned drawbacks.

This and other aims are reached with the present innovation according to the characteristics of the included claims solving the exposed problems by means of a probe for the reading of food temperature introduced into heat lowering devices, being provided with a curve handle, almost at right angles to the part to be introduced into the food, favouring above all the extraction, equipped on the end with sensitive means for reading the temperature, and in which at least a part of said body to be introduced is heated, being provided internally with an electric resistor operating in low voltage, said probe heating itself only in the presence of determined conditions controlled by an electronic microprocessing apparatus interacting with the operative logic of the heat lowering device.

In this way through the notable creative contribution the effect of which realizes an immediate technical progress, various advantages are achieved. Firstly it is possible to rapidly remove the probe from the product without any effort, also thanks to the particular conformation of the handle that favours the grasp. Resulting in, that on one side manipulation is avoided, giving the product a guaranty of maximum hygiene, on the other considering the programmable and greatly reduced time, necessary on the detaching of probe, preventing the start of the defrosting, all, optimal conditions for a better preservation.

With reference to DE-U-9411598 the applicant has voluntarily limited the scope of the present application and submitted separate claims for Germany.

These and other advantages appear from the subsequent preferred embodiments, with the help of the included drawings, the details of which are not to be considered limitative but only supplied as an example.

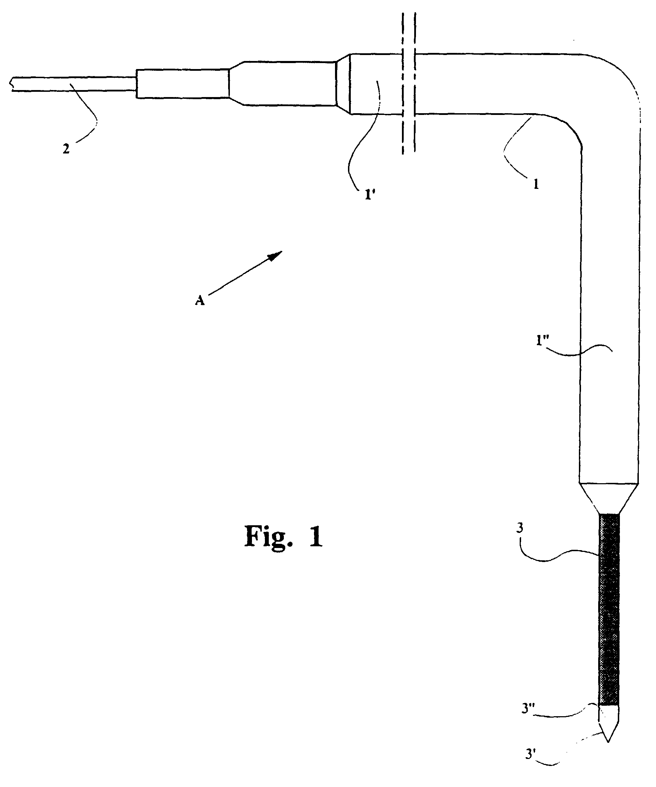

Figure 1 represents a side view of a probe for reading the temperature of food products.

Also making reference to the figure, it is disclosed that a probe (A) for the reading of food temperature, introduced particularly in heat lowering devices, is essentially made up of a single body obtained preferably in stainless steel AISI 316, polished and connected to the heat lowering equipment by a cable of norm (2), of the silicon type fit to be used for contact particularly of food substances.

The characteristic of the structure and conformation of the body, is such to provide two functions, on one side that offering a convenient handle (1), giving the probe the faculty to be comfortably grasped by the user making, the introduction easier, but above all simplifying the extraction from the product to be conserved, on the other that to simplify the single extraction providing a rapid heating of at least a part of the probe (3).

As far the handle (1) is concerned, it greatly resembles an "L" shape, overturned, of which the upper section (1), being at right angles to the vertical section (1"), favours the hold of the fingers or viceversa the stop of the palm of the hand. Forming an all in one with the body, and at the end of the curved handle (1), the heated part (3) is found, being provided with resistances operating in low voltage, that extends for a good part of the tapered element, and which ending with a pointed part for piercing (3'), provides in this proximity means sensitive to temperature (3"). Finally, the data detected from this last are directly carried by the cable (2) to the heat lowering device, through which a logical command unit will co-ordinate the functioning of the probe (A).

In a heat lowering device, at the end of a freezing cycle, only the part (3) of the probe (A), heats for about 2", allowing to remove said probe (A) without touching the product. Such possibility, preferably, is guaranteed by the safety of not defrosting the product accidentally, heating only in the presence of the following conditions, controlled by an electronic microprocessing apparatus, also co-operating with the logical command of the heat lowering device, in more detail, consisting in the fact that:
- it is necessary that the probe reads a temperature < - 10° C;
- it is necessary that the door of the heat lowering device is open.
To these conditions, one adds the intrinsic safety, and which regard the short heating time of the part (3), that, in this case, cannot go over 1.5". Secondly, the fact that even if the probe (A) reads a temperature such to go over the pre-set temperature, it automatically disengages, and finally the low voltage functioning.

## Claims (Claims for the following Contracting State(s): CH, LI, ES, FR, GB)

1. Probe for reading food temperature particularly for heat lowering devices, such as food freezers, said probe comprising a probe handle, a probe body extending from said handle and temperature detecting means in said probe body to detect the food temperature while the probe body is inserted into the food to be frozen, characterized in that said probe body includes heating means to heat said body and locally defrost the surrounding food when the probe has to be removed from the frozen food.

2. Probe according to claim 1, characterized in that said handle has a substantially overturned "L" shape, with a base section and a vertical section, the base section being almost at right angles to the vertical section or slightly open.

3. Probe according to claim 1, characterized in that said heating means comprise resistances operating at low voltage for heating a major part of the probe body.

4. Probe according to the preceding claims, characterized in that the curve handle forms an all in one with said probe body including said temperature detecting means.

5. Probe according to the preceding claim, characterized in that said probe body is heated only in the presence of the following conditions:
the probe is controlled by an electronic microprocessing apparatus, co-operating with the logical command of the heat lowering device, consisting in that:
- the probe reads a temperature > -10°C
- the door of the heat lowering device is open.

6. Probe according to the preceding claims, characterized in that the short heating time of the probe body does not go over 1.5"-2".

7. Probe according to the preceding claims, characterized in that even if the probe (A) reads a temperature such to go over the preset temperature, it automatically disengages.

8. Probe according to the preceding claims, characterized in that its piercing pointed part (3') has installed closed inside it, temperature detecting means (3").

## Claims (Claims for the following Contracting State(s): DE)

1. Probe for the reading of food temperature introduced particularly into heat-lowering devices, wherein it is provided with a handle, a probe body extending from said handle equipped on the end with sensitive means for reading the temperature, and in which at least a part of the body of the probe to be introduced in the food is heated (3) , with resistances operating in low voltage, characterized in that the handle (1) greatly resembles an "L" shape, of which the base section (1'), is almost at right angles to the vertical section (1"), or slightly open.

2. Probe according to the preceding claims, characterized in that the curve handle (1) forms an all in one with the heated body (3) and of temperature reader (3").

3. Probe according to the preceding claims, characterized in that it heats only in the presence of the following conditions:
the probe is controlled by an electronic microprocessing apparatus, co-operating with the logical command ofthe heat lowering device, consisting in that:
- the probe reads a temperature < -10° C;
- the door of the heat lowering device is open.

4. Probe according to the preceeding claims, characterized in that the short heating time of the part (3) does not go over 1,5"-2".

5. Probe according to the preceeding claims, characterized in that even if the probe (A), reads a temperature such to go over the preset temperature, it automatically disengages.

6. Probe according to preceding claims characterized in that its piercing pointed part (3') has installed closed inside it, temperature sensitive means (3").

## Patentansprüche (Patentansprüche für folgende(n) Vertragsstaat(en): CH, LI, ES, FR, GB)

1. Sonde zum Ablesen einer Nahrungsmitteltemperatur, insbesondere für Abkühleinrichtungen wie etwa Nahrungsmittel-Gefriergeräte, wobei diese Sonde umfasst: einen Sondengriff, einen von diesem Griff abstehenden Sondenkörper und innerhalb dieses Sondenkörpers befindliche Temperaturdetektiermittel zum Detektieren der Nahrungsmitteltemperatur, während die Sonde in die einzufrierenden Nahrungsmittel hineingesteckt ist, **dadurch gekennzeichnet**, dass der Sondenkörper Heizmittel zum Heizen dieses Körpers und zum örtlichen Entfrosten der umgebenden Nahrungsmittel dann, wenn die Sonde aus den gefrorenen Nahrungsmitteln entfernt werden soll, umfasst.

2. Sonde nach Anspruch 1, **dadurch gekennzeichnet**, dass dieser Griff eine im wesentlichen abgebogene "L"-Form mit einem Basisabschnitt und einem vertikalen Abschnitt hat, wobei der Basisabschnitt ungefähr im rechten Winkel zum vertikalen Abschnitt steht oder geringfügig geöffnet ist.

3. Sonde nach Anspruch 1, **dadurch gekennzeichnet**, dass die Heizmittel mit niedriger Spannung arbeitende Widerstände umfasst, um einen größeren Teil des Sondenkörpers zu heizen.

4. Sonde nach den vorangehenden Ansprüchen, **dadurch gekennzeichnet**, dass der Kurvengriff mit dem die Temperaturdetektiermittel enthaltenden Sondenkörper ein Ganzes bildet.

5. Sonde nach dem vorangehenden Anspruch, **dadurch gekennzeichnet**, dass der Sondenkörper nur bei Vorliegen der folgenden Bedingungen geheizt wird: die Sonde wird von einem elektronischen Mikroprozessorgerät gesteuert, welches mit dem logischen Kommando der Abkühleinrichtung zusammenwirkt, das darin besteht, dass: die Sonde eine Temperatur <-10°C liest, die Tür der Abkühleinrichtung offen ist.

6. Sonde nach den vorangehenden Ansprüchen, **dadurch gekennzeichnet**, dass die kurze Heizzeit des Sondenkörpers nicht über 1,5" - 2" geht.

7. Sonde nach den vorangehenden Ansprüchen, **dadurch gekennzeichnet**, dass sogar wenn die Sonde (A) eine Temperatur liest, die über die voreingestellte Temperatur hinausgeht, diese sich automatisch abkoppelt.

8. Sonde nach den vorangehenden Ansprüchen, **dadurch gekennzeichnet**, dass innerhalb des Bohrspitzenteils (3') eingeschlossen Temperaturdetektiermittel (3") installiert sind.

## Patentansprüche (Patentansprüche für folgende(n) Vertragsstaat(en): DE)

1. Sonde für das Ablesen einer Nahrungsmitteltemperatur, die insbesondere in Abkühleinrichtungen eingebracht wird, wobei diese mit einem Griff versehen ist, ein an dem Ende mit Fühlermitteln zum Lesen der Temperatur ausgestatteter Sondenkörper von diesem Griff absteht, und wobei wenigstens ein in die Nahrungsmittel einzuführender Teil (3) des Körpers der Sonde mittels Widerständen geheizt wird, die mit niedriger Spannung arbeiten, **dadurch gekennzeichnet**, dass der Griff (1) weitgehend einer "L"-Form gleicht, bei der der Basisabschnitt (1') ungefähr im rechten Winkel zu dem vertikalen Abschnitt (1") steht oder leicht geöffnet ist.

2. Sonde nach dem vorangehenden Anspruch, **dadurch gekennzeichnet**, dass der Kurvengriff (1) mit dem geheizten Körper (3) und der Temperaturleseeinrichtung (3") ein Ganzes bildet.

3. Sonde nach den vorangehenden Ansprüchen, **dadurch gekennzeichnet**, dass diese nur bei Vorliegen der folgenden Bedingungen heizt:
- die Sonde wird von einem elektronischen Mikroprozessorgerät gesteuert, welches mit dem logischen Kommando der Abkühleinrichtung zusammenarbeitet, welches darin besteht, dass
- die Sonde eine Temperatur <-10°C liest;
- die Tür der Abkühleinrichtung offen ist.

4. Sonde nach den vorangehenden Ansprüchen, **dadurch gekennzeichnet**, dass die kurze Heizzeit des Teils (3) nicht über 1,5" - 2" geht.

5. Sonde nach den vorangehenden Ansprüchen, **dadurch gekennzeichnet**, dass auch wenn die Sonde (A) eine Temperatur liest, die über die voreingestellte Temperatur hinaus geht, diese sich automatisch abkoppelt.

6. Sonde nach den vorangehenden Ansprüchen, **dadurch gekennzeichnet**, dass innerhalb deren Bohrspitzenteil (3') eingeschlossen die Temperaturfühlermittel (3") installiert sind.

## Revendications (Revendications pour l'(les) Etat(s) contractant(s) suivant(s): CH, LI, ES, FR, GB)

1. Sonde destinée à mesurer la température de produits alimentaires en particulier pour des dispositifs frigorifiques, tels que des congélateurs, ladite sonde comportant une poignée de sonde, un corps de sonde s'étendant depuis ladite poignée et des moyens de détection de température dans ledit corps de sonde afin de détecter la température de produits alimentaires alors que le corps de sonde est inséré dans les produits alimentaires devant être congelés, caractérisée en ce que ledit corps de sonde comprend des moyens de chauffage destinés à chauffer ledit corps et à dégeler localement le produit alimentaire environnant lorsque la sonde doit être enlevée du produit alimentaire congelé.

2. Sonde selon la revendication 1, caractérisée en ce que ladite poignée a une forme sensiblement en « L » inversé, avec une section de base et une section verticale, la section de base étant pratiquement à angle droit par rapport à la section verticale ou légèrement ouverte.

3. Sonde selon la revendication 1, caractérisée en ce que lesdits moyens de chauffage comportent des résistances fonctionnant à basse-tension afin de chauffer une majeure partie du corps de sonde.

4. Sonde selon les revendications précédentes, caractérisée en ce que la poignée courbe forme un tout avec ledit corps de sonde incluant lesdits moyens de détection de température.

5. Sonde selon les revendications précédentes, caractérisée en ce que ledit corps de sonde est chauffé uniquement en présence des conditions suivantes :
la sonde est commandée par un appareil électronique à microprocesseur, qui coopère avec la commande logique du dispositif frigorifique, qui consiste en ce que :
- la sonde lit une température < - 10°C,
- la porte du dispositif frigorifique est ouverte.

6. Sonde selon les revendications précédentes, caractérisée en ce que le temps de chauffage court du corps de sonde ne dépasse pas 1,5" à 2".

7. Sonde selon les revendications précédentes, caractérisée en ce que, même si la sonde (A) lit une température telle qu'elle dépasse la température prédéterminée, elle se désengage automatiquement.

8. Sonde selon les revendications précédentes, caractérisée en ce que sa partie pointue de perçage (3') a des moyens de détection de température (3") qui sont enfermés dedans.

## Revendications (Revendications pour l'(les) Etat(s) contractant(s) suivant(s): DE)

1. Sonde destinée à mesurer la température de produits alimentaires introduits en particulier dans des dispositifs frigorifiques, la sonde étant pourvue d'une poignée, un corps de sonde s'étendant depuis ladite poignée et étant équipé à l'extrémité de moyens sensitifs destinés à mesurer la température, au moins une partie du corps de la sonde devant être introduite dans les produits alimentaires étant chauffée (3), avec des résistances fonctionnant à basse-tension, caractérisée en ce que la poignée (1) ressemble fortement à un « L », dont la section de base (1') est pratiquement à angle droit par rapport à la section verticale (1"), ou légèrement ouverte.

2. Sonde selon la revendication précédente, caractérisée en ce que la poignée courbe (1) forme un tout avec le corps chauffé (3) et le lecteur de température (3").

3. Sonde selon les revendications précédentes, caractérisée en ce qu'elle chauffe uniquement en présence des conditions suivantes :
la sonde est commandée par un appareil électronique à microprocesseur, qui coopère avec la commande logique du dispositif frigorifique, qui consiste en ce que :
- la sonde lit une température < - 10°C,
- la porte du dispositif frigorifique est ouverte.

4. Sonde selon les revendications précédentes, caractérisée en ce que le temps de chauffage court de la partie (3) ne dépasse pas 1,5" à 2".

5. Sonde selon les revendications précédentes, caractérisée en ce que, même si la sonde (A) lit une température telle qu'elle dépasse la température prédéterminée, elle se désengage automatiquement.

6. Sonde selon les revendications précédentes, caractérisée en ce que sa partie pointue de perçage (3') a des moyens sensibles à la température (3") qui sont enfermés dedans.
